**Europäisches Patentamt**

**European Patent Office**

**Office européen des brevets**

(19)

(11) Veröffentlichungsnummer: **0 026 880**
A1

# (12) EUROPÄISCHE PATENTANMELDUNG

(21) Anmeldenummer: **80105823.1**

(22) Anmeldetag: **25.09.80**

(51) Int. Cl.³: **G 11 B 3/70,** G 11 B 3/62

(30) Priorität: **03.10.79 DE 2940077**

(43) Veröffentlichungstag der Anmeldung: **15.04.81**
**Patentblatt 81/15**

(84) Benannte Vertragsstaaten: **AT BE CH DE FR GB IT LI LU NL SE**

(71) Anmelder: **TELDEC TELEFUNKEN-DECCA SCHALLPLATTEN GMBH, Heussweg 25, D-2000 Hamburg 19 (DE)**

(72) Erfinder: **Borchard, Heinz, Ing. grad., Fr. Hebbelstrasse 31, D-2352 Nortorf (DE)**
Erfinder: **Redlich, Horst, Ing. grad., Plassstrasse 3a, D-1000 Berlin 37 (DE)**

(74) Vertreter: **Einsel, Robert, Dipl.-Ing., Theodor-Stern-Kai 1, D-6000 Frankfurt/Main 70 (DE)**

(54) **Plattenförmiger Aufzeichnungsträger und Verfahren zu dessen Herstellung.**

(57) Die Erfindung bezieht sich auf einen plattenförmigen Aufzeichnungsträger (1) mit einer Einlage (2, 6) aus ferromagnetischem Material zur Verbesserung der Haltewirkung beim Abspielvorgang. Die Einlage (2, 6) besteht dabei aus einer etikettartigen, ringförmigen Scheibe mit einer Vielzahl von Öffnungen (3), um bei der Herstellung der Platten den Durchtritt des Plattenmaterials zu ermöglichen.

**EP 0 026 880 A1**

- 2 -

TELDEC Telefunken Decca
Schallplatten GmbH
Heussweg 25

2000 Hamburg 19

Hannover,den 01.10.1979
UE2-H Me/vß      H 79/59

## Plattenförmiger Aufzeichnungsträger

Die Erfindung betrifft einen plattenförmigen Aufzeichnungsträger, der auf eine Zentrierung eines Abspielgerätes aufgelegt wird und magnetisch festgehalten wird.

Plattenförmige Aufzeichnungsträger werden im allgemeinen
von Hand auf ein Abspielgerät aufgelegt, indem der Aufzeichnungsträger auf die verlängerte Achse eines Drehtellers, die
im oberen Ende leicht konisch ausgebildet ist, aufgelegt wird.
Dabei erfolgt eine Abspielung mit einem mechanischen oder
optischen Abtaster von oben, so daß der Aufzeichnungsträger
auf einem Teller voll aufliegen kann.

Bei Aufzeichnungsträgern für Druckabtastung oder optische
Abtastung ist eine weit höhere Anforderung an die Zentrizität
während der Abspielung zu stellen. Es ist dabei von Vorteil,
den Aufzeichnungsträger von der gleichen Seite abzuspielen,
von der er zentriert wird. Dabei kann dann der Aufzeichnungs-

0026880

träger nur noch im unbespielten Bereich auf einem Teller aufliegen. Zur kraftschlüssigen Mitnahme des Aufzeichnungsträgers reicht dann das Eigengewicht nicht mehr aus und es muß
beispielsweise eine magnetische Anziehung des Aufzeichnungsträgers an dem Teller vorgenommen werden.

Dies erfolgt durch einen Magnetring im Plattenteller, der in
Wirkverbindung mit einer in der Platte an zugeordneter Stelle
befindlichen ferromagnetischen Metallscheibe steht. Durch die
Anziehungskraft des Magnetringes wird der Aufzeichnungsträger
fest an dem Teller gehalten.

Die Anbringung eines ferromagnetischen Ringes am Aufzeichnungsträger bringt aber Probleme mit sich. Bei einer nachträglichen Anbringung, z.B. durch Aufkleben eines Ringes aus
Eisenblech, besteht die Gefahr, daß durch die Manipulation
am fertig geprägten Aufzeichnungsträger die Aufzeichnung beschädigt oder verschmutzt wird. Eine gleichzeitige Anbringung
von ringförmigen Scheiben während des thermoplastischen Herstellungsprozesses ist problematisch, weil die Ausbildung der
dammartigen Erhöhung zur Zentrierung durch eine eingelegte
geschlossene Scheibe unmöglich gemacht wird. Außerdem erzielt
man zwischen dem Material des Aufzeichnungsträgers, z.B. PVC,
und einem Eisenblech keine haltbare Verbindung.

Aufgabe der Erfindung ist es, einen plattenförmigen Aufzeichnungsträger mit erhabenen Zentrierungen im Zentrum anzugeben,
der zusammen mit ferromagnetischen Einlagen in einem Arbeitsgang herzustellen ist.

Die Aufgabe wird durch die im Anspruch 1 genannten Maßnahmen
gelöst. Weitergehende Merkmale sind in den Unteransprüchen
beschrieben.

BAD ORIGINAL

0026880

Die Erfindung ermöglicht es, in einem Arbeitsgang, d.h. beim thermoplastischen Ausformen des Aufzeichnungsträgers, ferromagnetisches Material in denselben einzubringen. Durch die entsprechende Anordnung von Durchbrüchen in den scheibenförmigen ferromagnetischen Einlagen wird erreicht, daß gleichzeitig dammartige Zentrierkonen ausgebildet werden können und eine feste Verbindung mit dem Plattenmaterial entsteht. Das Zentrum des Aufzeichnungsträgers wird dadurch außerdem besonders formstabil.

Die Erfindung wird nachstehend an Hand von Zeichnungen näher beschrieben. Es zeigen:
Fig. 1 einen plattenförmigen Aufzeichnungsträger im Querschnitt,
Fig. 2 einen plattenförmigen Aufzeichnungsträger in perspektivischer Ansicht,
Fig. 3 eine Fortbildung der Erfindung.

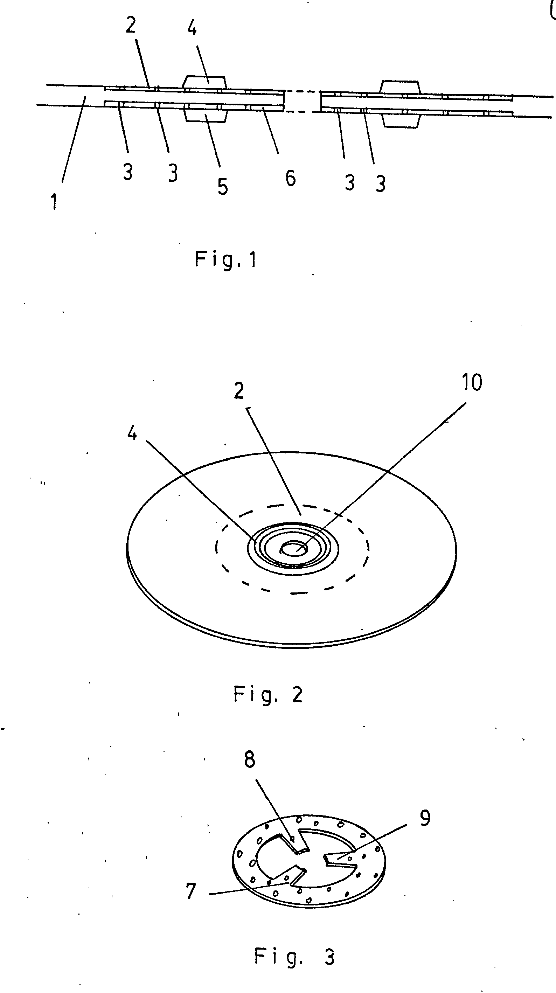

Der in Fig. 1 dargestellte Aufzeichnungsträger 1 enthält in seinem zentralen Bereich zwei gelochte Bleche (2 und 6) deren Löcher mit Plattenmasse gefüllt sind. Bei der Herstellung des Aufzeichnungsträgers werden vor dem Einbringen der Plattenmasse die vorgesehenen Bleche zentral an den beiden Formhälften angebracht. Bei der Umformung der Plattenmasse tritt ein Teil durch die vielen kleinen Löcher (3) der Bleche hindurch, so daß die Bleche mit der Plattenmasse fest verbunden sind und auf den beiden Oberflächen des Aufzeichnungsträgers die dammartigen Zentrierkonen (5 und 5) gebildet werden.

Fig. 2 zeigt den Aufzeichnungsträger 1 in perspektivischer Ansicht. Die dammartige Erhöhung 4 ist im Bereich des Lochbleches 2 angeordnet. Durch die Verwendung eines Lochbleches mit einer zentralen Zentrierung ist das Blech beim Herstellen des Aufzeichnungsträgers ohne Probleme zu zentrieren. Anstelle eines Lochbleches mit einer Bohrung ist auch die Verwendung eines Lochringes mit Stegen denkbar (Fig. 3).

Fig. 3 zeigt eine Scheibe aus gelochtem Blech, die drei Stege
7,8,9 enthält, die nach innen gerichtet sind. Die Stege sind
so lang bemessen, daß eine gedachte Verbindung ihrer Enden
einen Kreis ergibt, der dem Zentrierloch 10 des Aufzeichungsträgers entspricht.

## Patentansprüche

1. Plattenförmiger Aufzeichnungsträger mit einer Einlage aus ferromagnetischem Material zur Verbesserung der Haltewirkung beim Abspielvorgang, dadurch gekennzeichnet, daß die Einlage eine etikettartige ringförmige Scheibe ist, die mit einer Vielzahl von Öffnungen versehen ist, um beim Herstellen der Platten den Durchtritt des Plattenmaterials zu ermöglichen.

2. Aufzeichnungsträger nach Anspruch 1, dadurch gekennzeichnet, daß das Material aus einem gelochten Blech besteht.

3. Aufzeichnungsträger nach Anspruch 1, dadurch gekennzeichnet, daß das ferromagnetische Material eine zentrale Bohrung zur Zentrierung aufweist.

4. Aufzeichnungsträger nach Anspruch 1, dadurch gekennzeichnet, daß das ferromagnetische Material aus einem Ring mit radialen Stegen besteht.

5. Platteförmiger Aufzeichnungsträger nach einem der Ansprüche 1 bis 4, dadurch gekennzeichnet, daß die Aussparungen so bemessen sind, daß in einzelnen Bereichen mehr Plattenmaterial hindurchtreten kann als in anderen Bereichen.

6. Plattenförmiger Aufzeichnungsträger nach Anspruch 2, dadurch gekennzeichnet, daß auf jeder Seite der Platte eine Scheibe vorgesehen ist.

7. Verfahren zur Herstellung eines plattenförmigen Aufzeichnungsträgers nach einem der Ansprüche 1 bis 2, dadurch gekennzeichnet, daß die Scheiben wie Etikette in die Preßform eingelegt werden.

Fig. 1

Fig. 2

Fig. 3

H 79/59

Europäisches Patentamt

**EUROPÄISCHER RECHERCHENBERICHT**

0026880

Nummer der Anmeldung
EP 80 10 5823

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>CH - A - 258 355</u> (SCHAEREN)<br>* Seite 1, Zeilen 27-61; Figuren 1-3 * | 1-3,5-7 | G 11 B 3/70<br>G 11 B 3/62 |
| A | <u>US - A - 3 430 966</u> (GREGG)<br>* Spalte 2, Zeilen 42-49; Figur 3 * | 1,3 | |
| A | <u>LU - A - 29 578</u> (STEIN)<br>* Seite 2, Zeilen 26-35; Seite 3, Zeilen 15-19; Figur 4 * | 1,3,6 | RECHERCHIERTE SACHGEBIETE (Int. Cl.³) |
| P | <u>DE - A - 2 821 296</u> (BORCHARD)<br>* Seite 7, Zeilen 16-22; Figuren 6,8 * | 1,6,7 | G 11 B   3/62<br>3/70<br>3/82<br>3/84<br>17/02 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-12-1980 | SANDRI |

EPA form 1503.1   06.78